# EUROPÄISCHE PATENTSCHRIFT

(11) **EP 4 057 165 B1**
(45) Veröffentlichungstag und Bekanntmachung des Hinweises auf die Patenterteilung: **17.07.2024**
(21) Anmeldenummer: 21162079.4
(22) Anmeldetag: 11.03.2021
(51) Int. Cl.: G06F 21/32, G06F 3/16, G10L 15/22, G10L 17/00, H04L 12/28

(54) **SPRACHASSISTENZSTEUERUNG**
VOICE ASSISTANCE CONTROL
COMMANDE D'ASSISTANCE VOCALE

(43) Veröffentlichungstag der Anmeldung: 14.09.2022
(73) Patentinhaber: Deutsche Telekom AG, 53113 Bonn (DE)
(72) Erfinder: Minow, Jascha, 64625 Bensheim (DE); Platschek, Martin Michael, 12557 Berlin (DE); El Mallouki, Said, 56329 St. Goar (DE); Jahn, Carl, 65191 Wiesbaden (DE)
(74) Vertreter: Braun-Dullaeus Pannen Emmerling Patent- & Rechtsanwaltspartnerschaft mbB

(56) Entgegenhaltungen:
- EP-A1- 3 451 330
- WO-A1-2018/213415
- WO-A1-2019/132896
- US-A1- 2014 172 953
- US-A1- 2019 206 412
- US-A1- 2019 377 898
- US-A1- 2020 342 011

## Beschreibung

Die vorliegende Erfindung betrifft ein Verfahren zur Sprachassistenzsteuerung für eine Raumeinheit, die zumindest einen Raum aufweist. Die Erfindung betrifft auch eine Sprachassistenz-Plattform zur Sprachassistenzsteuerung. Im Übrigen betrifft die Erfindung ein Sprachassistenzsystem zur Sprachassistenzsteuerung. Zudem betrifft die Erfindung ein zur Ausführung des Verfahrens vorgesehenes Com puterprogram m produkt.

Sprachassistenten erlauben die Nutzung von über den Raum verteilten Sprachassistenzgeräten, insbesondere Smart Speakern, durch verschiedene Personen, die einer Raumeinheit, insbesondere einem Haushalt, angehören. Diese Nutzung kann auf einen Raum, in dem sich das Sprachassistenzgerät befindet, begrenzt sein. Die Nutzung kann aber auch in anderen Räumen der Raumeinheit, insbesondere des Haushalts, erfolgen, wenn sich in diesen Räumen ebenfalls Sprachassistenzgeräte befinden.

Bei der Nutzung von Sprachassistenzgeräten in einer Raumeinheit, insbesondere einem Haushalt, stellen sich die folgenden Problematiken:
- Privatsphäre schützen: Wie lässt sich verhindern, dass Besucher der Raumeinheit vorhandene Sprachassistenzgeräte nutzen, obwohl dies nicht gewünscht ist, um insbesondere zu verhindern, dass Besucher vertrauliche Information oder Nachrichten abrufen sowie ungewünschte Befehle erteilen, beispielsweise den Wecker auf 2:00 Uhr in der Nacht stellt?
- Datenschutzrichtlinien einhalten: Wie kann man Personen, insbesondere Besuchern, die Nutzung der Sprachassistenzgeräte ermöglichen, ohne geltende Datenschutzrichtlinien, beispielsweise die Datenschutz-Grundverordnung (DSGVO), zu verletzen?
- Verhinderung der Störung durch ungewollte Aktivierung der Sprachassistenzgeräte: Wie lässt sich vermeiden, dass ein Sprachassistenzgerät bei mehreren Personen im Raum Gespräche unterbricht, weil die Gespräche irrtümlicherweise als Sprachbefehl erkannt wurden?
- Multiraum-Erlebnis: Wie lässt sich sicherstellen, dass bei einer Raumeinheit mit mehreren Personen, insbesondere einem Mehrpersonenhaushalt, die Mitnahme einer Sprachinteraktion von einem Raum zu einem nächsten Raum gelingt.

In diesem Zusammenhang lehrt die US 2019/377898 A1 ein System, ein Gerät und eine Methode zur Durchsetzung der Privatsphäre während einer Kommunikationssitzung mit einem Sprachassistenten. Als Reaktion auf eine Anfrage zum Initiieren einer Kommunikationssitzung mit einem Sprachassistenten wird ein Benutzer über ein oder mehrere erste Kriterien authentifiziert. Während der Kommunikationssitzung mit dem Sprachassistenten werden regelmäßig Sensordaten erfasst. Die Sensordaten werden verarbeitet, um über ein oder mehrere zweite Kriterien eine Anzahl der in einer Umgebung des Sprachassistenten anwesenden Personen zu ermitteln. Die Kommunikation privater Daten durch den Sprachassistenten wird ermöglicht, wenn sich eine Person in der Umgebung befindet und diese Person der authentifizierte Benutzer ist. Die Kommunikation privater Daten durch den Sprachassistenten ist deaktiviert, wenn sich eine Person in der Umgebung befindet und diese Person nicht der authentifizierte Benutzer ist. Wenn mehr als eine Person in der Umgebung des Sprachassistenten anwesend ist, wird die Kommunikation privater Daten durch den Sprachassistenten nur dann ermöglicht, wenn festgestellt wird, dass die Umgebung des Sprachassistenten einem oder mehreren vorgegebenen Datenschutzkriterien für eine Mehrperson entspricht Umfeld.

Die Aufgabe der zugrundeliegenden Erfindung besteht darin ein Verfahren zur Sprachassistenzsteuerung Verfügung zu stellen, welches auf einfache und effiziente Weise die Privatsphäre schützt, dass Einhalten von Datenschutzrichtlinien ermöglicht, ungewollte Störungen verhindert und ein Multiraum-Erlebnis zur Verfügung stellt. Die Aufgabe der Erfindung besteht auch darin eine Sprachassistenz-Plattform, eine Sprachassistenzsystem und ein Computerprogrammprodukt mit den zuvor genannten Eigenschaften zur Verfügung zu stellen.

Der Erfindung löst diese Aufgabe durch ein Verfahren zur Sprachassistenzsteuerung, welches die Merkmale des Anspruchs 1 aufweist.

Hierzu umfasst das Verfahren zur Sprachassistenzsteuerung für eine Raumeinheit, die zumindest einen Raum aufweist, die folgenden Schritte:
- einen Raumerfassungsschritt, bei dem die Anzahl der Personen die sich innerhalb des zumindest einen Raums befinden, auf Grundlage eines akustischen Signals bestimmt wird, das von einem Mikrophon des zumindest einen Sprachassistenzgeräts bestimmt wird,
- einen Raumeinheit-Erfassungsschritt (102), bei dem die Zugehörigkeit von der zumindest einen Person zu der Raumeinheit erfasst wird, und
- einen Identifizierungsschritt, bei dem die zumindest eine in dem zumindest einem Raum befindliche Person identifiziert wird.

Die Raumeinheit umfasst zumindest einen Raum und ist beispielsweise ein Haushalt, ein Büro, eine Büroabteilung oder dergleichen, dabei kann es auch sein, dass die Räume einer Raumeinheit räumlich voneinander getrennt sind. Zumindest ein Raum der Raumeinheit weist zumindest ein Sprachassistenzgerät auf, was insbesondere auch heißt, dass ein Raum mehrere Sprachassistenzgeräte aufweisen kann. Das Sprachassistenzgerät weist zumindest ein Mikrofon auf, welches ein akustisches Signal bestimmen kann. Insbesondere weist das Sprachassistenzgerät zudem zumindest ein Lautsprecher auf, der zur Wiedergabe von akustischen Signalen vorgesehen ist, beispielsweise handelt es sich bei dem Sprachassistenzgerät um einen Smart Speaker. Weist das Sprachassistenzgerät keinen Lautsprecher auf, handelt es sich um einen Berührungspunkt, respektive Touchpoint.

Beim Raumerfassungsschritt wird die Anzahl der Personen, die sich innerhalb des Raums befinden, auf Grundlage eines akustischen Signals bestimmt, wobei das akustische Signal von dem zumindest einem Mikrofon des Sprachassistenzgeräts bestimmt wird. Durch die Auswertung des akustischen Signals lässt sich die Anzahl der im Raum befindlichen Personen auf einfache und effiziente Weise bestimmen. Vorzugsweise wird dazu das von dem Mikrofon des Sprachassistenzgeräts gemessene akustische Signal in ein elektrisches Signal umgewandelt und an eine Sprachassistenz-Plattform gesendet, welche dieses Signal auswertet.

Beim Raumeinheit-Erfassungsschritt wird die Zugehörigkeit der Personen zu der Raumeinheit erfasst. Dabei wird erfasst, welche Personen zur Raumeinheit zugehörig sind. Vorzugsweise sind die zur Raumeinheit gehörenden Personen in einer Datenbank hinterlegt, wobei insbesondere die Sprachassistenzgeräte und/oder die Sprachassistenz-Plattform auf diese Datenbank zugreifen können, um die Zugehörigkeit einer Person zur Raumeinheit zu erfassen. Die Erfassung der Personen kann bevorzugt manuell durch die Verwendung einer Eingabevorrichtung, insbesondere mittels eines Rechners, Smartphones, Tablets oder des Sprachassistenzgeräts selber.

Beim Identifizierungsschritt wird die zumindest eine im Raum befindliche Person identifiziert. Es wird also festgestellt, bei wem es sich bei der im Raum befindlichen Personen handelt. Vorzugsweise wird festgestellt, ob die im Raum befindliche Person zur Raumeinheit zugehörig ist.

Die Kombination aus Raumerfassungsschritt, Raumeinheit-Erfassungsschritt und Identifizierungsschritt bildet die Grundlage für eine einfache und effiziente Realisierung des Schutzes der Privatsphäre, der Einhaltung von Datenschutzrichtlinien, der Vermeidung von Störungen und der Zurverfügungstellung eines Multiraum-Erlebnisses. Die Verfahrensschritte ermöglichen eine Erfassung der Situation oder der Status in der Raumeinheit, wobei insbesondere festgestellt wird welche Personen sich in den Räumen der Raumeinheit befinden und, ob diese Personen der Raumeinheit zugehörig sind.

Eine bevorzugte Ausführung der Erfindung sieht vor, dass der Raumerfassungsschritt umfasst:
- eine Sprachdifferenzierung, wobei die Anzahl von unterschiedlichen Stimmen bestimmt wird, und/oder
- eine Geräuschmessung.

Bei der Sprachdifferenzierung werden bevorzugt die Sprachprofile der im Raum befindlichen Personen bestimmt und differenziert, wobei die Anzahl an unterschiedlichen Sprachprofile der Anzahl an Personen im Raum entspricht.

Vorzugsweise wird bei der Geräuschmessung mittels eines maschinellen Lernalgorithmus ein Grundrauschen des Raums erkennt, bei dem keine Person im Raum befindlich ist. Auf diese Weise lassen sich permanent vorliegende Geräusche von beispielsweise Kühlschränken oder Klimageräten bei der Sprachdifferenzierung automatisch ausblenden, um ein exakteres Ergebnis bei der Bestimmung der Anzahl der Personen in dem Raum zu erzielen.

Eine bevorzugte Ausführung der Erfindung sieht vor, dass der Raumeinheit-Erfassungsschritt für die der Raumeinheit zugehörigen Personen umfasst:
- eine Sprachprofilerfassung, wobei ein zu der jeweiligen Person gehörendes Sprachprofil erfasst und hinterlegt wird, und/oder
- eine Endgeräterfassung, wobei zumindest ein zu der jeweiligen Person gehörendes Endgerät, vorzugsweise mobiles Endgerät, erfasst und hinterlegt wird.

Die Sprachprofile und/oder zugeordneten Endgeräte werden vorzugsweise in einer Datenbank hinterlegt, auf die die Sprachassistenz-Plattform und/oder die Sprachassistenzgeräte zugreifen können. Auf diese Weise werden bei der Erfassung der zur Raumeinheit gehörenden Personen zusätzliche Informationen hinterlegt, die vorzugsweise bei der Identifikation von Vorteil sind. Die Hinterlegung des Sprachprofils ermöglicht auf einfache Identifikation der im Raum befindlichen Personen, indem die auf Grundlage des vom Mikrofon bestimmten akustischen Signals bestimmten Sprachprofile mit den hinterlegten Sprachprofilen verglichen werden. Die Hinterlegung der zugeordneten Endgeräte ermöglicht zudem eine verbesserte Raumerfassung, indem vorzugsweise die Datennutzung der zugeordneten Endgeräte ausgewertet wird.

Eine bevorzugte Ausführung der Erfindung sieht vor, dass beim Raumeinheit-Erfassungsschritt die Anzahl der Personen bestimmt wird, die sich in den Räumen der Raumeinheit befinden. Vorzugsweise wird hierfür eine Sprachdifferenzierung durchgeführt, bei der die Anzahl an unterschiedlichen Stimmen in den Räumen der Raumeinheit bestimmt wird. Bevorzugt wird dabei eine Geräuschmessung durchgeführt, bei der insbesondere ein maschineller Lernalgorithmus ein Grundrauschen des Raums erkennt. Weiterhin vorzugsweise wird eine allgemeine Datennutzungsauswertung durchgeführt, bei der die Datennutzung der Endgeräte der zur Raumeinheit gehörenden Personen ausgewertet werden. Auf diese Weise wird eine Gesamtübersicht der in der Raumeinheit vorhandenen Personen erzeugt.

Eine bevorzugte Ausführung der Erfindung sieht vor, dass der Identifizierungsschritt eine Sprachidentifikation umfasst, wobei zumindest eine im Raum befindlich Person des Sprachprofils identifiziert wird. Die Identifikation des Sprachprofils hat den Vorteil, dass keine Eingabe von Identifikationsdaten erforderlich ist, sondern alleine das Sprechen im Raum ausreicht um eine Person zu identifizieren. Die Hinterlegung der bekannten Sprachprofile erfolgt vorzugsweise in einer Datenbank auf die die Sprachassistenzgerät-Plattform und/oder die Sprachassistenzgeräte zugreifen können.

Eine bevorzugte Ausführung der Erfindung sieht vor, dass der Identifizierungsschritt umfasst:
- einen Sprachprofilvergleich, wobei die vom Mikrophon gemessenen Sprachprofile mit den Sprachprofilen verglichen werden, die bei der Sprachprofilerfassung erfasst und hinterlegt werden, und/oder
- eine individualisierte Datennutzungsauswertung, wobei die Datenverbindungen der jeweiligen der zur Raumeinheit gehörenden Personen ausgewertet werden.

Der Vergleich der mittels des Mikrofons gemessenen Sprachprofile mit den Sprachprofilen, die beim Raumeinheit-Erfassungsschritt erfasst und hinterlegt werden, ermöglicht eine Identifizierung der zur Raumeinheit zugehörig Personen. Auch die Auswertung der Datennutzung der Datenverbindungen von den Endgeräten, die den zur Raumeinheit zugehörig Person zugeordnet sind, ermöglicht eine verbesserte und effizientere Identifizierung der Person, die zur Raumeinheit zugehörig sind. Die Sprachprofile und Endgeräte werden die zur Raumeinheit zugehörigen Personen zugeordnet vorzugsweise Datenbank hinterlegt, auf die die Sprachassistenz-Plattform und/oder die Sprachassistenzgeräte zugreifen können.

Die Erfindung sieht vor, dass das Sprachassistenzgerät dazu eingerichtet ist Sprachbefehle anzunehmen und weiterzuleiten oder umzusetzen,
- wobei das Sprachassistenzgerät Sprachbefehle einer ersten Kategorie nur weiterleitet, wenn diese von einer Person abgegeben worden sind, die der Raumeinheit zugehörig sind, und/oder
- wobei das Sprachassistenzgerät Sprachbefehle einer zweiten Kategorie unabhängig von der den Sprachbefehl abgebenden Person weiterleitet.

Auf diese Weise wird verhindert, dass Personen die nicht zur Raumeinheit gehören die Sprachbefehle der ersten Kategorie abgeben können. Sprachbefehle der ersten Kategorie können nur von Personen abgegeben werden, die zur Raumeinheit gehören, beispielsweise Angehörige eines Haushalts oder Mitarbeiter eines Büros oder eine Abteilung. Die Sprachbefehle der ersten Kategorie werden vorzugsweise im Rahmen des Raumeinheit-Erfassungsschritt festgelegt und hinterlegt. Die Hinterlegung erfolgt in einer Datenbank, auf die die Sprachassistenzgeräte und/oder die SprachassistenzPlattform zugreifen können. Bei den Sprachbefehlen der ersten Kategorie handelt es sich somit um nicht-öffentliche Sprachbefehle, die insbesondere wegen der Privatsphäre schützenswert sind. Bei den Sprachbefehl der zweiten Kategorie handelt es sich um öffentliche Sprachbefehle, die keiner Freigabe bedürfen, beispielsweise sind dies Fragen nach der Uhrzeit oder dem Wetter.

Eine bevorzugte Ausführung der Erfindung sieht vor, dass das Sprachassistenzgerät dazu eingerichtet ist Sprachbefehle anzunehmen und weiterzuleiten oder umzusetzen, wobei vor der Weiterleitung eines Sprachbefehls die Anzahl und/oder Identität der im Raum befindlichen Personen geprüft wird und ein Sprachbefehl einer dritten Kategorie nur weitergeleitet wird, wenn sich eine bestimmte Personengruppe in dem Raum befindet. Bevorzugt ist die Personengruppe ausschließlich durch Personen gebildet, die der Raumeinheit zugehörig sind; und/oder die Personengruppe ist ausschließlich durch Personen gebildet ist, die vorher autorisiert worden sind; und/oder die Personengruppe ist ausschließlich durch die den Sprachbefehl abgebende Person gebildet. Dadurch wird in Abhängigkeit der dritten Kategorie der Sprachbefehle eine definierte Privatsphäre gewährleistet. So wird z.B. verhindert, dass vorgegebene private Sprachbefehle in Anwesenheit von anderen Personen weitergeleitet oder umgesetzt werden. Vorzugsweise werden die Personengruppen und/oder die Kategorien von Sprachbefehlen beim Raumeinheit-Erfassungsschritt definiert und in einer Datenbank abgelegt, auf die die Sprachassistenz-Plattform und/oder die Sprachassistenzgeräte zugreifen können. Die Festlegung der Sprachbefehle der dritten Kategorie erfolgt vorzugsweise durch eine zur Raumeinheit gehörende Person und/oder autorisierte Person.

Eine bevorzugte Ausführung der Erfindung sieht vor, dass das Sprachassistenzgerät dazu eingerichtet ist Sprachbefehle anzunehmen und weiterzuleiten,
- wobei vor Weiterleitung des Sprachbefehls geprüft wird, ob die den Sprachbefehl abgebende Person einer Datennutzung zugestimmt hat,
- sollte eine Zustimmung nicht vorliegen, wird die den Sprachbefehl abgebende Person aufgefordert der Datennutzung zuzustimmen,
- sollte eine Zustimmung vorliegen, wird der Sprachbefehl weitergeleitet.

Auf diese Weise wird sichergestellt, dass Sprachbefehle von Personen, die einer Datennutzung nicht zugestimmt haben, nicht weitergeleitet oder umgesetzt werden. Vorzugsweise wird so ein datenrechtskonformer Betrieb der Sprachassistenzsteuerung zur Verfügung gestellt. Die Zustimmung zur Datennutzung erfolgt bevorzugt durch einen Sprachbefehl, insbesondere wobei ein Akzeptieren durch Sprachbefehl nach der Durchsage einer Datennutzungsbelehrung erfolgt.

Eine bevorzugte Ausführung der Erfindung sieht vor, dass eine bereits erteilte Zustimmung zur Datennutzung einer Person gespeichert wird, insbesondere wobei die Zustimmung dem Sprachprofil der Person zugeordnet wird. Die Speicherung der Zustimmung erfolgt vorzugsweise in einer Datenbank auf die die Sprachassistenz-Plattform und/oder die Sprachassistenzgeräte zugreifen können. Die Abspeicherung der Zustimmung ermöglicht einen effizienten Betrieb, bei dem unnötige Abfragen zur Datennutzung vermieden werden.

Eine bevorzugte Ausführung der Erfindung sieht vor, dass ein Dienst, der durch ein erstes Sprachassistenzgerät zur Verfügung gestellt wird, welches sich in einem ersten Raum befindet, durch ein zweiten Sprachassistenzgerät zur Verfügung gestellt wird, dass sich in einem zweiten Raum befindet, sobald festgestellt wird, dass sich die Person in dem zweiten Raum befindet. Bei dem Dienst handelt es sich beispielsweise um einen Telefonanruf oder eine Audiowiedergabe. Der Dienst wird auf diese Weise der Person auch zur Verfügung gestellt, wenn diese den Raum der Raumeinheit wechselt, beispielsweise vom Wohnzimmer in die Küche geht.

Eine weitergehende Ausführung der Erfindung sieht vor, dass der Dienst vom zweiten Sprachassistenzgerät nicht zur Verfügung gestellt wird, wenn sich im zweiten Raum bestimmte weitere Personen befinden, insbesondere
- Personen, die nicht der Raumeinheit zugehörig sind, und/oder
- Personen, die vorher nicht autorisiert worden sind, und/oder
- jegliche Personen, außer der Person für die der Dienst zur Verfügung gestellt wird.

Durch die vorherige Prüfung mittels des zweiten Sprachassistenzgeräts, ob sich weitere Personen im zweiten Raum befinden, wird die Privatsphäre bei der Zurverfügungstellung eines Dienstes gewährleistet. Beispielsweise wird ein Telefonat nicht vom zweiten Sprachassistenzgerät zur Verfügung gestellt, wenn sich bestimmte Personen im zweiten Raum befinden. Zudem kann eine ungewollte Störung von weiteren Personen durch die Fortführung des Dienstes verhindert werden, beispielsweise wird die Autowiedergabe vom zweiten Sprachassistenzgerät nicht fortgesetzt, wenn sich weitere Person im Raum befinden. Die Personen, bei denen bestimmte Dienste nicht fortgeführt werden, werden vorzugsweise beim Raumeinheit-Erfassungsschritt festgelegt. Die entsprechende Zuordnung von Personen, Diensten und Räumen wird vorzugsweise in einer Datenbank hinterlegt, auf die die SprachassistenzPlattform und/oder das Sprachassistenzgerät zugreifen können.

Eine weitere Ausführung der Erfindung sieht vor, dass vor der Zurverfügungstellung eines Diensts durch einen Sprachassistenzgerät geprüft wird, in welchem Raum sich die Person befindet, für die der Dienst zur Verfügung gestellt werden soll, wobei der Dienst in dem Raum zur Verfügung gestellt wird, in dem sich die Person befindet. Dadurch wird vorteilhafter Weise ein effizienter Betrieb zur Verfügung gestellt, da nur die Sprachassistenzgeräte aktiviert werden, die von der den Dienst empfangenden Person gehört werden. Beispielsweise wird ein Anruf ausschließlich von den Sprachassistenzgerät wiedergegeben, indem sich die angerufene Person befindet.

Eine weitergehende Ausführung der Erfindung sieht vor, dass der Dienst nicht zur Verfügung gestellt wird, wenn sich in dem Raum bestimmte weitere bestimmte Personen befinden, insbesondere
- Personen, die nicht der Raumeinheit zugehörig sind, und/oder
- Personen , die vorher nicht autorisiert worden sind, und/oder
- jegliche Personen, außer der Person für die der Dienst zur Verfügung gestellt wird.

So wird vorteilhafter Weise die Privatsphäre gewahrt, indem ein privater Dienst nicht ausgeführt wird, wenn sich weitere Person im Raum befinden, beispielsweise wird ein Anruf nicht von dementsprechenden Sprachassistenzgerät durchgeführt, wenn sich bestimmte weitere Personen Raum befinden. Eine bevorzugte Ausführung der Erfindung sieht vor, dass ein anderes Sprachassistenzgerät in einem anderen Raum für die Zurverfügungstellung des Dienstes empfohlen wird, in dem sich vorzugsweise keine weitere Person. Beispielsweise wird durch das Sprachassistenzgerät empfohlen den eingehenden Anruf im Arbeitszimmer anzunehmen, um die Privatsphäre zu wahren. Eine besonders bevorzugte Ausführung der Erfindung sieht vor, dass der Dienst an ein Endgerät der Person weitergeleitet wird, falls kein freies Sprachassistenzgerät zur Verfügung steht.

Die Aufgabe der Erfindung wird zudem durch eine Sprachassistenz-Plattform zur Sprachassistenzsteuerung für eine Raumeinheit, die zumindest einen Raum aufweist, gelöst, wobei die Sprachassistenz-Plattform dazu eingerichtet ist:
- in einem Raumerfassungsschritt die Anzahl der Personen, die sich innerhalb des zumindest einen Raums befinden, auf Grundlage eines akustischen Signals zu bestimmen, das von einem Mikrophon zumindest eines Sprachassistenzgeräts bestimmt ist, welches mit der SprachassistenzPlattform verbunden ist,
- in einem Raumeinheit-Erfassungsschritt die Zugehörigkeit von der zumindest einen Person zu der Raumeinheit zu erfassen, und
- in einem Identifizierungsschritt die zumindest eine in dem zumindest einem Raum befindliche Person zu identifizieren.

Die Sprachassistenz-Plattform ist somit eingerichtet das erfindungsgemäße Verfahren durchzuführen. Die Sprachassistenz-Plattform ist vorzugsweise ein physischer und/oder logischer Server (Cloud-Dienst), der zur Durchführung der oben beschriebenen Schritte konfiguriert ist, insbesondere wobei die Sprachassistenz-Plattform mehrere physikalische und/oder logische Server (Cloud-Dienst) aufweist. Alternativ ist die Sprachassistenz-Plattform in zumindest eins der Sprachassistenzgerät integriert. Vorzugsweise umfasst die Sprachassistenz-Plattform Rechenmittel und Kommunikationsmittel, die so konfiguriert sind, dass sie die oben beschriebenen Schritte automatisch durchführen. Insbesondere ist die Sprachassistenz-Plattform dazu eingerichtet Kommunikationsverbindungen zu den Sprachassistenzgeräten aufzubauen und aufrechtzuerhalten. Zudem ist die Sprachassistenz-Plattform insbesondere dazu eingerichtet auf die Datenbank zuzugreifen, in der die Informationen der zur Raumeinheit gehörenden Personen hinterlegt sind, insbesondere die Sprachprofile und die zugeordneten Endgeräte.

Die der Erfindung zugrundeliegende Aufgabe wird zudem durch ein Sprachassistenzsystem zur Sprachassistenzsteuerung für eine räumliche Einheit, die zumindest einen Raum aufweist, gelöst, wobei das Sprachassistenzsystem umfasst:
- eine Sprachassistenz-Plattform mit den oben beschriebenen Merkmalen und
- zumindest ein Sprachassistenzgerät, das dazu eingerichtet ist mittels eines Mikrofons ein akustisches Signal zu bestimmen und mit der Sprachassistenzplattform verbunden zu werden.

Die der Erfindung zugrundeliegende Aufgabe wird im Übrigen durch ein Computerprogrammprodukt zur Sprachassistenzsteuerung gelöst, welches bei der Ausführung des Programms durch die Sprachassistenz-Plattform diese veranlasst die oben genannten Schritte des Verfahrens auszuführen.

Im Folgenden werden bevorzugte Ausführungsbeispiele der vorliegenden Erfindung unter Bezugnahme auf die Figuren erläutert:
- Fig. 1:: zeigt eine schematische Darstellung einer Raumeinheit mit dem erfindungsgemäßen Sprachassistenzsystem, und
- Fig. 2:: zeigt eine schematische Darstellung erfindungsgemäßen Verfahrens.

Nachfolgend werden Merkmale der vorliegenden Erfindung anhand von bevorzugten Ausführungsformen erläutert. Die vorliegende Offenbarung ist dabei nicht auf die konkret genannten Merkmalskombinationen beschränkt. Vielmehr lassen sich die hier genannten Merkmale beliebig zu erfindungsgemäßen Ausführungsformen kombinieren, sofern dies nachfolgend nicht ausdrücklich ausgeschlossen ist.

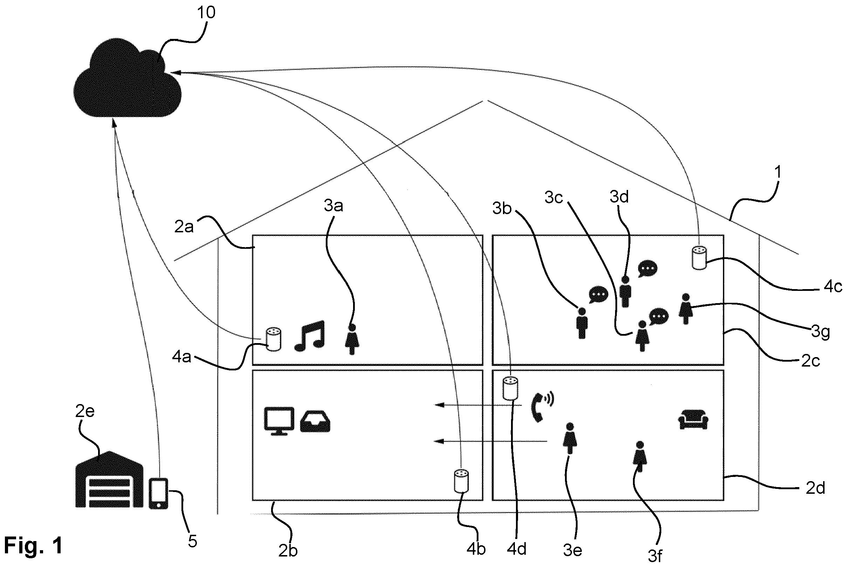

Fig. 1 zeigt eine schematische Darstellung einer Raumeinheit 1 mit dem erfindungsgemäßen Sprachassistenzsystem. Die Raumeinheit 1 kann beispielsweise ein Haushalt ein Büro oder eine Büroabteilung sein, wobei die Raumeinheit 1 eine Mehrzahl an Räumen aufweist: einen ersten Raum 2a, einen zweiten Raum 2b, einen dritten Raum 3c und einen vierten Raum 3d. In den in Fig. 1 dargestellten Beispiel handelt es sich bei der Raumeinheit um ein Haushalt 1, der ein erstes Kinderzimmer 2a, ein Arbeitszimmer 2b, ein zweites Kinderzimmer 2c und ein Wohnzimmer 2d aufweist. Die Räume der Raumeinheit können auch räumlich getrennt voneinander sein, beispielsweise ist in Fig. 1 dem Haushalt 1 eine Garage 2e zugeordnet. Im Haushalt 1 befinden sich mehrere Personen 3a, 3b, 3c, 3d, 3e, 3f, 3g. Zudem befindet sich im dargestellten Beispiel in den Räumen 2a, 2b, 2c, 2d jeweils ein Sprachassistenzgerät 4a, 4b, 4c, 4d. Die Sprachassistenzgeräte 4a, 4b, 4c, 4d verfügen jeweils zumindest über ein Mikrofon, dass akustische Signale bestimmen kann. Zudem kann jedes der Sprachassistenzgeräte 4a, 4b, 4c, 4d einen Lautsprecher aufweisen, der akustische Signale abgeben kann. Die Sprachassistenzgeräte 4a, 4b, 4c, 4d sind mit einer Sprachassistenz-Plattform 10 verbunden. Durch die Verbindungen der Sprachassistenzgeräte 4a, 4b, 4c, 4d mit der Sprachassistenz-Plattform 10 werden Signale ausgetauscht. Die entsprechenden Sensor- und Statusmeldungen werden über die Verbindungen übertragen, welche in Fig. 1 als Pfeile dargestellt sind. Bevorzugt werden die von den Mikrophonen der Sprachassistenzgeräte 4a, 4b, 4c, 4d bestimmten akustischen Signale in elektrische Signale umgewandelt und an die Sprachassistenz-Plattform 10 weitergeleitet werden, sowie elektrische Signale der Sprachassistenz-Plattform 10 an die Sprachassistenzgeräte 4a, 4b, 4c, 4d gesendet und von den Lautsprechern der Sprachassistenzgeräte 4a, 4b, 4c, 4d als akustische Signale ausgegeben werden. Die Verbindungen zwischen den Sprachassistenzgeräten 4a, 4b, 4c, 4d und der Sprachassistenz-Plattform 10 werden beispielsweise über das Internet zur Verfügung gestellt. Zudem besteht eine Verbindung zwischen der Sprachassistenz-Plattform 10 und einen Endgerät 5, welches insbesondere der fünften Person 3e zugeordnet ist.

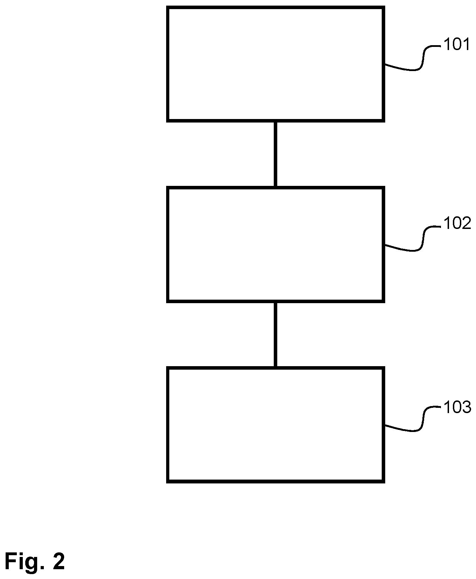

Fig. 2 zeigt die Verfahrensschritte des erfindungsgemäßen Verfahrens. Zunächst wird ein Raumerfassungsschritt 101 durchgeführt, bei dem die Anzahl der Personen 3a, 3b, 3c, 3d, 3e, 3f, 3g, die sich innerhalb eines Raumes 2a, 2b, 2c, 2d befinden bestimmt wird. Dies erfolgt mittels des akustischen Signals, welches von dem Mikrofon des jeweiligen Sprachassistenzgeräts 4a, 4b, 4c, 4d bestimmt wird. Hierbei wird eine Sprachdifferenzierung durchgeführt, bei der die Anzahl an unterschiedlichen Stimmen, respektive Sprachprofilen, bestimmt wird. Vorzugsweise wird auch eine Geräuschmessung durchgeführt, bei der insbesondere ein maschineller Lernalgorithmus ein Grundrauschen des Raums 2a, 2b, 2c, 2d erkennt, welches vorliegt, wenn keine Person 3a, 3b, 3c, 3d, 3e, 3f, 3g im Raum befindlich ist. In dem in Fig. 1 dargestellten Fall wird mittels des ersten Sprachassistenzgeräts 4a bestimmt, dass sich im ersten Raum 2a, hier dem ersten Kinderzimmer, ausschließlich die erste Person 3a befindet. Mittels des dritten Sprachassistenzgeräts 4c wird beispielsweise anhand der unterschiedlichen Sprachprofile erkannt, dass sich vier Personen 3b, 3c, 3d und 3g im dritten Raum 2c, hier dem zweiten Kinderzimmer, befinden.

Bei einem Raumeinheit-Erfassungsschritt 102 wird die Zugehörigkeit der Personen 3a, 3b, 3c, 3d, 3e, 3f, 3g zur Raumeinheit 1 erfasst. Beispielsweise werden Informationen der Person 3a, 3e, 3f, 3g, die der Raumeinheit 1 zugehörig sind in einer Datenbank gespeichert. Vorzugsweise wird für die der Raumeinheit zugehörigen Personen 3a, 3e, 3f, 3g eine Sprachprofilerfassung durchgeführt, bei der für jede der Personen 3a, 3e, 3f, 3g ein jeweiliges Sprachprofil erfasst und hinterlegt wird. Bevorzugt wird zudem erfasst und hinterlegt, welche Endgeräte 5 zu den Personen 3a, 3e, 3f, 3g gehören. Die Datenbank, in der die Informationen hinterlegt oder abgespeichert werden, ist Bestandteil der Sprachassistenz-Plattform 10 oder die Sprachassistenz-Plattform 10 und/oder zumindest eines der Sprachassistenzgeräte 4a, 4b, 4c, 4d kann auf die Datenbank zugreifen.

Um einen besseren Überblick über den vorliegenden Status, insbesondere über die Personen-Raum-Zuordnung, zu erhalten, wird beim Raumeinheit-Erfassungsschritt 102 vorzugsweise die Anzahl der Personen 3a, 3b, 3c, 3d, 3e, 3f, 3g bestimmt, die sich in der Raumeinheit 1 befinden. Hierzu gehören sowohl die Personen 3a, 3e, 3f, 3g die der Raumeinheit zugehörig sind, als auch die Personen 3b, 3c, 3d die sich beispielsweise als Besucher in der Raumeinheit 1 befinden. Für die Bestimmung der Anzahl der Personen 3a, 3b, 3c, 3d, 3e, 3f, 3g in der Raumeinheit 1 wird vorzugsweise eine Sprachdifferenzierung, eine Geräuschmessung und/oder eine allgemeine Datennutzungsauswertung durchgeführt.

Bei einem Identifizierungsschritt 103 werden die in einem Raum befindlichen Personen 3a, 3b, 3c, 3d, 3e, 3f, 3g identifiziert. Die Identifizierung erfolgt durch Sprachidentifikation, wobei die Personen 3a, 3b, 3c, 3d, 3e, 3f, 3g anhand ihres Sprachprofils identifiziert werden. Hierzu wird vorzugsweise ein Sprachprofilvergleich durchgeführt, bei dem die vom Mikrofon bestimmten Sprachprofile mit den Sprachprofilen verglichen werden, die bereits erfasst und hinterlegt worden sind. Zudem wird eine individualisierte Datenauswertung vorgenommen, bei der die Datenverbindungen der Endgeräte 5 der zur Raumeinheit gehörenden Personen 3a, 3e, 3f, 3g ausgewertet werden. Beispielsweise wird ausgewertet, welches Endgerät 5, bzw. welche zugeordnete Person 3e, einen bestimmten insbesondere räumlich begrenzten Zugriffspunkt (z.B. WLAN Access Point oder LAN-Anschluss) als Datenverbindungen nutzt.

Auf Grundlage des Raumerfassungsschritts 101, des Raumeinheit-Erfassungsschritts 102 und des Identifizierungsschritts 103 ermittelt die Sprachassistenz-Plattform 10 für Fig. 1 den folgenden Status:
- erstes Kinderzimmer 2a: eine bekannte erste Person 3a, die Musik hört;
- zweites Kinderzimmer 2c: vier Personen 3b, 3c, 3d und 3g, wobei eine siebte Person 3g bekannt ist, beziehungsweise zum Haushalt 1 gehört;
- Wohnzimmer 2d: zwei Personen 3e und 3f, wobei eine fünfte Person 3e bekannt ist, und wobei ein vertraulicher Anruf eingeht (z.B. von der Bank);
- Arbeitszimmer 2b: keine Person anwesend und/oder keine Aktivität; und
- Garage 2e: keine Person anwesend und/oder keine Aktivität.

Die Sprachassistenzgeräte 4a, 4b, 4c, 4d sind dazu eingerichtet Sprachbefehle anzunehmen und weiterzuleiten, bzw. umzusetzen. Eine Weiterleitung von Sprachbefehlen einer ersten Kategorie (nicht öffentlich) erfolgt aber nur, wenn dieser Sprachbefehl von einer Person 3a, 3e, 3g abgegeben worden ist, die der Raumeinheit 1 zugehörig ist. Sprachbefehle einer zweiten Kategorie (öffentlich) werden hingegen unabhängig von der den Sprachbefehl abgebenden Person 3a, 3b, 3c, 3d, 3e, 3f, 3g weitergeleitet. Vorzugsweise kann die Einteilung der Kategorien durch eine autorisierte Person 3e vorgenommen werden, die zur Raumeinheit 1 zugehörig ist. Beispielsweise könnte das Einschalten eines Lichts der ersten Kategorie zugeordnet werden, sodass die erste Person 3a im ersten Raum 2a das Licht einschreiten kann, während die sechste Person 3f dies nicht kann, da dieser nicht-öffentliche Sprachbefehl nicht weitergeleitet, respektive umgesetzt, wird.

Vor der Weiterleitung eines Sprachbefehls wird die Anzahl und/oder Identität der im Raum befindlichen Personen geprüft und ein Sprachbefehl einer dritten Kategorie nur weitergeleitet, wenn sich eine bestimmte Personengruppe im Raum befindet. Vorzugsweise ist die Personengruppe ausschließlich durch Personen 3a, 3e, 3g gebildet, die der Raumeinheit 1 zugehörig sind, und/oder die Personengruppe ausschließlich durch Personen 3b, 3c gebildet ist, die vorher autorisiert worden sind, und/oder wobei die Personengruppe ist ausschließlich durch die den Sprachbefehl abgebende Person 3a gebildet ist. Bei den Sprachbefehlen der dritten Kategorie handelt es sich bevorzugt um vertrauliche Sprachbefehle, die insbesondere durch eine autorisierte Person 3e definiert werden. Beispielsweise wird dadurch verhindert, dass ein als vertraulich eingestufter vom zweiten Kind 3g abgegebener Sprachbefehl weitergeleitet wird, respektive umgesetzt wird, da sich nicht zum Haushalt 1 gehörenden Personen im zweiten Kinderzimmer 2c befinden.

Vor der Weiterleitung des Sprachbefehls wird zudem geprüft, ob die den Sprachbefehl abgebende Person 3a, 3b, 3c, 3d, 3e, 3f, 3g einer Datennutzung zugestimmt hat. Sollte eine Zustimmung nicht vorliegen, wird die den Sprachbefehl abgebende Person 3a, 3b, 3c, 3d, 3e, 3f, 3g dazu aufgefordert der Datennutzung zuzustimmen. Sobald die Zustimmung vorliegt wird der Sprachbefehl weitergeleitet. Vorzugsweise wird eine bereits erteilte Zustimmung zur Datennutzung gespeichert und einem Sprachprofil zugeordnet. Auf diese Weise kann die Einhaltung von Datenschutzbestimmungen eingehalten werden. Beispielsweise wird die sechste Person 3f (Besucher) aufgefordert der Datennutzung zuzustimmen, bevor deren Sprachbefehl weitergeleitet, respektive umgesetzt, wird.

In einer bevorzugten Ausführung wird ein Telefonat, das durch das vierte Sprachassistenzgerät 4d zur Verfügung gestellt wird, welches sich in dem vierten Raum 2d (Wohnzimmer) befindet, durch ein zweiten Sprachassistenzgerät 4b zur Verfügung gestellt, welches sich in einem zweiten Raum 2b befindet, sobald festgestellt wird, dass sich die fünfte Person 3e in dem zweiten Raum 2b befindet. Dadurch wird der fünften Person 3e vorteilhafterweise ein Multiraum-Erlebnis zur Verfügung gestellt. Das Telefonat wird vom dritten Sprachassistenzgerät 4c vorzugsweise nicht zur Verfügung gestellt, weil sich im dritten Raum 2c weitere Personen befinden, insbesondere Personen 3a, 3e, 3g, die der Raumeinheit 1 nicht zugehörig sind.

In einer weiteren bevorzugten Ausführung wird vor der Zurverfügungstellung eines Telefonats durch ein Sprachassistenzgerät 4a, 4b, 4c, 4d geprüft wird, in welchem Raum sich die Person 3e befindet, für die der Dienst zur Verfügung gestellt werden soll, wobei der Dienst durch das vierte Sprachassistenzgerät 4d zur Verfügung gestellt wird, welches sich in dem vierten Raum 2d (Wohnzimmer) befindet, in dem sich die Person 3e befindet. Dadurch wird vorteilhafterweise eine Störung der anderen Personen verhindert. Vorzugsweise wird das Telefonat nicht zur Verfügung gestellt, wenn sich, wie in Fig. 1 dargestellt, eine weitere Person, hier die sechste Person 3f (Besucher), im vierten Raum 2d (Wohnzimmer) befindet. In diesem Fall wird das zweite Sprachassistenzgerät 4b im zweiten Raum (Arbeitszimmer) für die Zurverfügungstellung des Telefonats vorgeschlagen, da sich im Arbeitszimmer 2b keine weiteren Personen 3a, 3b, 3c, 3d, 3f, 3g befinden. Diese Situation ist in Fig. 1 durch die beiden waagerechten Pfeile angedeutet, wobei das Telefonat vom zweien Sprachassistenzgerät 4b im zweiten Raum (Arbeitszimmer) zur Verfügung gestellt wird, um die Privatsphäre gegenüber dem Besucher 3f zu wahren. Sollte kein freies Sprachassistenzgerät zur Verfügung stehen, wird der Dienst insbesondere an ein Endgerät 5 der fünften Person 3e weitergeleitet. Hierdurch wird vorteilhafterweise insbesondere bei vertraulichen Gesprächen, beispielsweise von der Bank, eine Privatsphäre gewahrt. Die Dienste, deren Zurverfügungstellung bei Vorhandensein anderer Personen nicht vorgenommen werden, werden vorzugsweise von einer zur Raumeinheit 1 gehörenden Person 3a, 3e, 3g und/oder einer autorisierten Person 3e definiert und hinterlegt, insbesondere in der Datenbank, in der die Informationen zu den Personen abgelegt sind.

In Fig. 1 ist die Sprachassistenz-Plattform 10 ein physischer und/oder logischer Server (Cloud-Dienst), der zur Durchführung der oben beschriebenen Schritte konfiguriert ist. Alternativ ist die Sprachassistenz-Plattform 10 in zumindest eins der Sprachassistenzgeräte 4a, 4b, 4c, 4d intergiert.

### Bezuqszeichenliste:

- 1: Raumeinheit
- 2a: erster Raum, Kinderzimmer 1
- 2b: zweiter Raum, Arbeitszimmer
- 2c: dritter Raum, Kinderzimmer 2
- 2d: vierter Raum, Wohnzimmer
- 2e: fünfter Raum, Garage
- 3a: erste Person, erstes Kind
- 3b: zweite Person, Besucher
- 3c: dritte Person, Besucher
- 3d: vierte Person, Besucher
- 3e: fünfte Person, Elternteil
- 3f: sechste Person, Besucher
- 3g: siebte Person, zweites Kind
- 4a: erstes Sprachassistenzgerät
- 4b: zweites Sprachassistenzgerät
- 4c: drittes Sprachassistenzgerät
- 4d: viertes Sprachassistenzgerät
- 5: Endgerät

- 10: Sprachassistenz-Plattform

- 101: Raumerfassungsschritt
- 102: Raumeinheit-Erfassungsschritt
- 103: Identifizierungsschritt

## Patentansprüche

1. Verfahren zur Sprachassistenzsteuerung für eine Raumeinheit (1), die zumindest einen Raum (2a, 2b, 2c, 2d) aufweist, umfassend die folgenden Schritte:
- einen Raumerfassungsschritt (101), bei dem die Anzahl der Personen (3a, 3b, 3c, 3d, 3e, 3f, 3g) die sich innerhalb des zumindest einen Raums (2a, 2b, 2c, 2d) befinden, auf Grundlage eines akustischen Signals bestimmt wird, das von einem Mikrophon zumindest eines Sprachassistenzgeräts (4a, 4b, 4c, 4d) bestimmt wird,
- einen Raumeinheit-Erfassungsschritt (102), bei dem die Zugehörigkeit von der zumindest einen Person (3a, 3b, 3c, 3d, 3e, 3f, 3g) zu der Raumeinheit (1) erfasst wird, und
- einen Identifizierungsschritt (103), bei dem die zumindest eine in dem zumindest einem Raum (2a, 2b, 2c, 2d) befindliche Person (3a, 3b, 3c, 3d, 3e, 3f) identifiziert wird, wobei das Verfahren **dadurch gekennzeichnet ist, dass**:
- das Sprachassistenzgerät (4a, 4b, 4c, 4d) Sprachbefehle annimmt und weiterleitet,
- wobei das Sprachassistenzgerät (4a, 4b, 4c, 4d) Sprachbefehle einer ersten Kategorie nur weiterleitet, wenn diese von einer Person (3a, 3e, 3g) abgegeben worden sind, die der Raumeinheit (1) zugehörig ist, und
- wobei das Sprachassistenzgerät (4a, 4b, 4c, 4d) Sprachbefehle einer zweiten Kategorie unabhängig von der den Sprachbefehl abgebenden Person (3a, 3b, 3c, 3d, 3e, 3f, 3g) weiterleitet.

2. Verfahren zur Sprachassistenzsteuerung nach Anspruch 1, **dadurch gekennzeichnet, dass** der Raumerfassungsschritt (101) umfasst:
- eine Sprachdifferenzierung, wobei die Anzahl von unterschiedlichen Stimmen bestimmt wird, und/oder
- eine Geräuschmessung, insbesondere wobei ein maschineller Lernalgorithmus ein Grundrauschen des Raums (2a, 2b, 2c, 2d) erkennt, bei dem keine Person im Raum befindlich ist.

3. Verfahren zur Sprachassistenzsteuerung nach einem der Ansprüche 1 oder 2, **dadurch gekennzeichnet, dass** der Raumeinheit-Erfassungsschritt (102) für die Raumeinheit (102) zugehörigen Personen (3a, 3e, 3g) umfasst:
- eine Sprachprofilerfassung, wobei ein zu der jeweiligen Person (3a, 3e, 3g) gehörendes Sprachprofil erfasst und hinterlegt wird, und/oder
- eine Endgeräterfassung, wobei zumindest ein zu der jeweiligen Person (3a, 3b, 3e, 3f, 3g) gehörendes Endgerät (5), vorzugsweise mobiles Endgerät, erfasst und hinterlegt wird.

4. Verfahren zur Sprachassistenzsteuerung nach einem der vorherigen Ansprüche, **dadurch gekennzeichnet, dass** beim Raumeinheit-Erfassungsschritt (102) die Anzahl der Personen (3a, 3b, 3c, 3d, 3e, 3f, 3g) bestimmt wird, die sich in der Raumeinheit (1) befinden, wobei der Raumeinheit-Erfassungsschritt (102) insbesondere umfasst:
- eine Sprachdifferenzierung, wobei die Anzahl von unterschiedlichen Stimmen bestimmt wird, und/oder
- eine Geräuschmessung, insbesondere wobei ein maschineller Lernalgorithmus ein Grundrauschen des Raums erkennt, bei dem keine Person im Raum befindlich ist, und/oder
- eine allgemeine Datennutzungsauswertung, wobei die Datenverbindungen von Endgeräten (5) der zur Raumeinheit (1) gehörenden Personen (3a, 3e, 3g) ausgewertet werden.

5. Verfahren zur Sprachassistenzsteuerung nach einem der vorherigen Ansprüche, **dadurch gekennzeichnet, dass** der Identifizierungsschritt (103) eine Sprachidentifikation umfasst, wobei die zumindest eine im Raum (2a, 2b, 2c, 2d) befindliche Person (3a, 3b, 3c, 3d, 3e, 3f, 3g) anhand des Sprachprofils identifiziert wird.

6. Verfahren zur Sprachassistenzsteuerung nach Anspruch 3, **dadurch gekennzeichnet, dass** der Identifizierungsschritt (103) umfasst:
- einen Sprachprofilvergleich, wobei die vom Mikrophon bestimmten Sprachprofile mit den Sprachprofilen verglichen werden, die bei der Sprachprofilerfassung erfasst und hinterlegt werden, und/oder
- eine individualisierte Datennutzungsauswertung, wobei die Datenverbindungen der jeweiligen der zur Raumeinheit (1) gehörenden Personen (3a, 3e, 3g) ausgewertet werden.

7. Verfahren zur Sprachassistenzsteuerung nach einem der vorherigen Ansprüche, **dadurch gekennzeichnet, dass** das Sprachassistenzgerät (4a, 4b, 4c, 4d) dazu eingerichtet ist Sprachbefehle anzunehmen und weiterzuleiten, wobei vor Weiterleitung eines Sprachbefehls die Anzahl und/oder Identität der im Raum (2a, 2b, 2c, 2d) befindlichen Personen (3a, 3b, 3c, 3d, 3e, 3f, 3g) geprüft wird und ein Sprachbefehl einer dritten Kategorie nur weitergeleitet wird, wenn sich eine bestimmte Personengruppe in dem Raum (2a, 2b, 2c, 2d) befindet, insbesondere
- wobei die Personengruppe ausschließlich durch Personen (3a, 3e, 3g) gebildet ist, die der Raumeinheit (1) zugehörig sind, und/oder
- wobei die Personengruppe ausschließlich durch Personen (3b, 3c) gebildet ist, die vorher autorisiert worden sind, und/oder
- wobei die Personengruppe ausschließlich durch die den Sprachbefehl abgebende Person (3a) gebildet ist.

8. Verfahren zur Sprachassistenzsteuerung nach einem der vorherigen Ansprüche, **dadurch gekennzeichnet, dass** das Sprachassistenzgerät (4a, 4b, 4c, 4d) dazu eingerichtet ist Sprachbefehle anzunehmen und weiterzuleiten,
- wobei vor Weiterleitung des Sprachbefehls geprüft wird, ob die den Sprachbefehl abgebende Person (3a, 3b, 3c, 3d, 3e, 3f, 3g) einer Datennutzung zugestimmt hat,
- sollte eine Zustimmung nicht vorliegen, wird die den Sprachbefehl abgebende Person (3a, 3b, 3c, 3d, 3e, 3f, 3g) aufgefordert der Datennutzung zuzustimmen,
- sollte eine Zustimmung vorliegen, wird der Sprachbefehl weitergeleitet.

9. Verfahren zur Sprachassistenzsteuerung nach Anspruch 8, **dadurch gekennzeichnet, dass** eine bereits erteilte Zustimmung zur Datennutzung einer Person (3a, 3b, 3c, 3d, 3e, 3f, 3g) gespeichert wird, insbesondere wobei die Zustimmung dem Sprachprofil der Person (3a, 3b, 3c, 3d, 3e, 3f, 3g) zugeordnet wird.

10. Verfahren zur Sprachassistenzsteuerung nach einem der vorherigen Ansprüche, **dadurch gekennzeichnet, dass** ein Dienst, der durch ein erstes Sprachassistenzgerät (4d) zur Verfügung gestellt wird, welches sich in einem ersten Raum (2d) befindet, durch ein zweiten Sprachassistenzgerät (4b) zur Verfügung gestellt wird, das sich in einem zweiten Raum (2b) befindet, sobald festgestellt wird, dass sich die Person (3e) in dem zweiten Raum (2b) befindet; insbesondere wobei der Dienst vom zweiten Sprachassistenzgerät (4b) nicht zur Verfügung gestellt wird, wenn sich im zweiten Raum (2b) bestimmte weitere Personen befinden, insbesondere
- Personen (3a, 3e, 3g), die nicht der Raumeinheit (1) zugehörig sind, und/oder
- Personen (3d), die vorher nicht autorisiert worden sind, und/oder
- jegliche Personen (3b, 3c, 3d, 3e, 3f, 3g), außer der Person (3e) für die der Dienst zur Verfügung gestellt wird.

11. Verfahren zur Sprachassistenzsteuerung nach einem der vorherigen Ansprüche, **dadurch gekennzeichnet, dass** vor der Zurverfügungstellung eines Diensts durch ein Sprachassistenzgerät (4a, 4b, 4c, 4d) geprüft wird, in welchem Raum sich die Person (3e) befindet, für die der Dienst zur Verfügung gestellt werden soll, wobei der Dienst durch das Sprachassistenzgerät (4d) zur Verfügung gestellt wird, das sich in dem Raum (2d) befindet, in dem sich die Person (3e) befindet; insbesondere wobei der Dienst nicht zur Verfügung gestellt wird, wenn sich in dem Raum (2d) bestimmte weitere bestimmte Personen (3f) befinden, insbesondere
- Personen (3f), die nicht der Raumeinheit (1) zugehörig sind, und/oder
- Personen (3d), die vorher nicht autorisiert worden sind, und/oder
- jegliche Personen (3a, 3b, 3c, 3d, 3f, 3g), außer der Person (3e) für die der Dienst zur Verfügung gestellt wird;
insbesondere wobei ein anderes Sprachassistenzgerät (4b) in einen anderen Raum (4b) für die Zurverfügungstellung des Dienstes empfohlen wird, in dem sich keine weitere Person befindet;
insbesondere wobei der Dienst an ein Endgerät (5) der Person (3e) weitergeleitet wird, wenn kein freies Sprachassistenzgerät (4a, 4b, 4c, 4d) zur Verfügung steht.

12. Sprachassistenz-Plattform (10) zur Sprachassistenzsteuerung für eine räumliche Einheit (1), die zumindest einen Raum (2a, 2b, 2c, 2d) aufweist, dazu eingerichtet:
- in einem Raumerfassungsschritt (101) die Anzahl der Personen, die sich innerhalb des zumindest einen Raums (2a, 2b, 2c, 2d) befinden, auf Grundlage eines akustischen Signals zu bestimmen, das von einem Mikrophon zumindest eines Sprachassistenzgeräts (4a, 4b, 4c, 4d) bestimmt ist, welches mit der Sprachassistenz-Plattform (10) verbunden ist,
- in einem Raumeinheit-Erfassungsschritt (102) die Zugehörigkeit von der zumindest einen Person (3a, 3b, 3c, 3d, 3e, 3f, 3g) zu der Raumeinheit (1) zu erfassen, und
- in einem Identifizierungsschritt (103) die zumindest eine in dem zumindest einem Raum (2a, 2b, 2c, 2d) befindliche Person (3a, 3b, 3c, 3d, 3e, 3f, 3g) zu identifizieren,
- wobei das Sprachassistenzgerät (4a, 4b, 4c, 4d) dazu eingerichtet ist Sprachbefehle anzunehmen und weiterzuleiten, wobei die Sprachassistenz-Platform **dadurch gekennzeichnet ist, dass**:
- das Sprachassistenzgerät (4a, 4b, 4c, 4d) dazu eingerichtet ist Sprachbefehle einer ersten Kategorie nur weiterzuleiten, wenn diese von einer Person (3a, 3e, 3g) abgegeben worden sind, die der Raumeinheit (1) zugehörig ist, und
- wobei das Sprachassistenzgerät (4a, 4b, 4c, 4d) dazu eingerichtet ist Sprachbefehle einer zweiten Kategorie unabhängig von der den Sprachbefehl abgebenden Person (3a, 3b, 3c, 3d, 3e, 3f, 3g) weiterzuleiten.

13. Computerprogrammprodukt zur Sprachassistenzsteuerung, das bei der Ausführung des Programms durch eine Sprachassistenz-Plattform (10) diese veranlasst die Schritte des Verfahrens aus Anspruch 1 auszuführen.

## Claims

1. A method for voice assistance control for a space unit (1) that includes at least one room (2a, 2b, 2c, 2d), comprising the following steps:
- a room detection step (101), in which the number of persons (3a, 3b, 3c, 3d, 3e, 3f, 3g) located inside the at least one room (2a, 2b, 2c, 2d) is determined on the basis of an acoustic signal, which is determined by a microphone of at least one voice assistance device (4a, 4b, 4c, 4d),
- a space unit detection step (102), in which a determination is made as to the association of the at least one person (3a, 3b, 3c, 3d, 3e, 3f, 3g) with the space unit (1), and
- an identification step (103), in which the at least one person (3a, 3b, 3c, 3d, 3e, 3f) located in the at least one room (2a, 2b, 2c, 2d) is identified, wherein the method is **characterized in that**:
- the voice assistance device (4a, 4b, 4c, 4d) accepts and relays voice commands,
- wherein the voice assistance device (4a, 4b, 4c, 4d) only relays voice commands of a first category if they have been issued by a person (3a, 3e, 3g) who is associated with space unit (1), and
- wherein the voice assistance device (4a, 4b, 4c, 4d) relays voice commands of a second category regardless of the person (3a, 3b, 3c, 3d, 3e, 3f, 3g) issuing the voice command.

2. The method for voice assistance control according to Claim 1, **characterized in that** the room detection step (101) comprises:
- a speech differentiation, wherein the number of different voices is determined, and/or
- a noise measurement, in particular wherein a machine learning algorithm detects a background noise of the room (2a, 2b, 2c, 2d) with no persons present in the room.

3. The method for voice assistance control according to one of Claims 1 or 2, **characterized in that** the space unit detection step (102) for persons (3a, 3e, 3g) associated with the space unit (102) comprises:
- a speech profile acquisition, wherein a speech profile belonging to the respective person (3a, 3e, 3g) is captured and stored, and/or
- an end unit acquisition, wherein at least one terminal device (5), preferably a mobile terminal device, belonging to the respective person (3a, 3b, 3e, 3f, 3g) is captured and stored.

4. The method for voice assistance control according to any one of the preceding claims, **characterized in that** in the space unit detection step (102) the number of persons (3a, 3b, 3c, 3d, 3e, 3f, 3g) who are located in the space unit (1) is determined, wherein the space unit detection step (102) in particular comprises:
- a speech differentiation, wherein the number of different voices is determined, and/or
- a noise measurement, in particular wherein a machine learning algorithm detects a background noise of the room with no persons present in the room, and/or
- a general data usage evaluation, wherein the data connections of terminal devices (5) of the persons (3a, 3e, 3g) associated with the space unit (1) are evaluated.

5. The method for voice assistance control according to any one of the preceding claims, **characterized in that** the identification step (103) comprises a speech identification, wherein the at least one person (3a, 3b, 3c, 3d, 3e, 3f, 3g) located in the room (2a, 2b, 2c, 2d) is identified on the basis of the speech profile.

6. The method for voice assistance control according to Claim 3, **characterized in that** the identification step (103) comprises:
- a speech profile comparison, wherein to speech profiles determined by the microphone are compared with the speech profiles that are captured and stored during the speech profile acquisition, and/or
- an individualised data usage evaluation, wherein the data connections of the respective persons (3a, 3e, 3g) associated with the space unit (1) are evaluated.

7. The method for voice assistance control according to any one of the preceding claims, **characterized in that** the voice assistance device (4a, 4b, 4c, 4d) is configured to accept and relay voice commands, wherein before a voice command is relayed the number and/or identity of the persons (3a, 3b, 3c, 3d, 3e, 3f, 3g) located in the room (2a, 2b, 2c, 2d) is checked and a voice command of a third category is only relayed if a certain group of persons is located in the room (2a, 2b, 2c, 2d), in particular
- wherein the group of persons consists exclusively of persons (3a, 3e, 3g) who are associated with the space unit (1), and/or
- wherein the group of persons consists exclusively of persons (3b, 3c) who have been authorised beforehand, and/or
- wherein the group of persons consists exclusively of the person (3a) who issued the voice command.

8. The method for voice assistance control according to any one of the preceding claims, **characterized in that** the voice assistance device (4a, 4b, 4c, 4d) is configured to accept and relay voice commands,
- wherein before the voice command is relayed a check is carried out to determine whether the person (3a, 3b, 3c, 3d, 3e, 3f, 3g) issuing the voice command has consented to a use of data,
- if a consent does not exist, the person (3a, 3b, 3c, 3d, 3e, 3f, 3g) issuing the voice command is prompted to consent to the use of data,
- if a consent does exist, the voice command is relayed.

9. The method for voice assistance control according to Claim 8, **characterized in that** a consent for data use granted previously by a person (3a, 3b, 3c, 3d, 3e, 3f, 3g) is stored, in particular wherein the consent is assigned to the speech profile of the person (3a, 3b, 3c, 3d, 3e, 3f, 3g).

10. The method for voice assistance control according to any one of the preceding claims, **characterized in that** a service that is made available by a first voice assistance device (4d) located in a first room (2d), is made available by a second voice assistance device (4b) located in a second room (2b) as soon as it is determined that the person (3e) is located in the second room (2b); in particular wherein the service is not made available by the second voice assistance device (4b) if certain further persons are located in the second room (2b), in particular
- persons (3a, 3e, 3g) who are not associated with the space unit (1), and/or
- persons (3d) who have not been authorised beforehand, and/or
- any persons (3b, 3c, 3d, 3e, 3f, 3g) other than the person (3e) for whom the service is made available.

11. The method for voice assistance control according to any one of the preceding claims, **characterized in that** before a service is made available by a voice assistance device (4a, 4b, 4c, 4d) a check is carried out to determine the room in which the person (3e) for whom the service is to be made available is located, wherein the service is made available by the voice assistance device (4d) which is in in the room (2d) in which the person (3e) is located; in particular wherein the service is not made available if certain other specified persons (3f) are present in the room (2d), in particular
- persons (3f) who are not associated with the space unit (1), and/or
- persons (3d) who have not been authorised beforehand, and/or
- any persons (3a, 3b, 3c, 3d, 3f, 3g) other than the person (3e) for whom the service is made available;
in particular wherein another voice assistance device (4b) in another room (4b) in which no other person is located is recommended for making the service available;
in particular wherein the service is relayed to a terminal device (5) of the person (3e) if no free voice assistance device(4a, 4b, 4c, 4d) is available.

12. A voice assistance platform (10) for voice assistance control for a space unit (1) that includes at least one room (2a, 2b, 2c, 2d), configured:
- in a room detection step (101), to determine the number of persons who are located inside the at least one room (2a, 2b, 2c, 2d) on the basis of an acoustic signal that is determined by a microphone of at least one voice assistance unit (4a, 4b, 4c, 4d) that is connected to the voice assistance platform (10),
- in a space unit detection step (102), to capture the association of the at least one person (3a, 3b, 3c, 3d, 3e, 3f, 3g) with the space unit (1), and
- in an identification step (103), to identify the at least one person (3a, 3b, 3c, 3d, 3e, 3f, 3g) located in the at least one room (2a, 2b, 2c, 2d),
- wherein the voice assistance device (4a, 4b, 4c, 4d) is configured to accept and relay voice commands, wherein the voice assistance platform is **characterized in that**:
- the voice assistance device (4a, 4b, 4c, 4d) is configured to relay voice commands of a first category only if such commands have been issued by a person (3a, 3e, 3g) who is associated with the space unit (1), and
- wherein the voice assistance device (4a, 4b, 4c, 4d) is configured to relay voice commands of a second category regardless of the person (3a, 3b, 3c, 3d, 3e, 3f, 3g) issuing the voice command.

13. A computer software product for voice assistance control, which when the program is run by a voice assistance platform (10) causes said platform to execute the steps of the method defined in Claim 1.

## Revendications

1. Procédé de commande d'assistance vocale pour une unité spatiale (1), qui présente au moins une pièce (2a, 2b, 2c, 2d), comprenant les étapes suivantes :
- une étape de détection de pièce (101), dans laquelle le nombre de personnes (3a, 3b, 3c, 3d, 3e, 3f, 3g) qui se trouvent dans au moins une pièce (2a, 2b, 2c, 2d), est déterminé à partir d'un signal acoustique transmis par un microphone d'au moins un appareil d'assistance vocale (4a, 4b, 4c, 4d),
- une étape de détection d'unité spatiale (102), dans laquelle l'appartenance de la ou des personnes (3a, 3b, 3c, 3d, 3e, 3f, 3g) à l'unité spatiale (1) est enregistrée, et
- une étape d'identification (103), dans laquelle la au moins une personne (3a, 3b, 3c, 3d, 3e, 3f) se trouvant dans au moins une pièce (2a, 2b, 2c, 2d) est identifiée, dans lequel le procédé est **caractérisé en ce que** :
- le dispositif d'assistance vocale (4a, 4b, 4c, 4d) accepte et transmet les commandes vocales,
- le dispositif d'assistance vocale (4a, 4b, 4c, 4d) ne transmet les commandes vocales d'une première catégorie que si elles proviennent d'une personne (3a, 3e, 3g), qui appartient à l'unité spatiale (1) et
- dans lequel le dispositif d'assistance vocale (4a, 4b, 4c, 4d) transmet des commandes vocales d'une deuxième catégorie indépendamment de la personne (3a, 3b, 3c, 3d, 3e, 3f, 3g) émettant la commande vocale.

2. Procédé de commande d'assistance vocale selon la revendication 1, **caractérisé en ce que** l'étape de détection d'espace (101) comprend :
- une différenciation vocale, dans laquelle le nombre de voix différentes est déterminé, et/ou
- une mesure de bruit, en particulier lorsqu'un algorithme d'apprentissage automatique détecte un bruit de fond dans la pièce (2a, 2b, 2c, 2d), dans laquelle personne ne se trouve.

3. Procédé de commande d'assistance vocale selon une des revendications 1 ou 2, **caractérisé en ce que** l'étape de détection d'unité spatiale (102) de personnes (3a, 3e, 3g) appartenant à l'unité spatiale (102) comprend :
- une capture de profil vocal, grâce à laquelle un profil vocal appartenant à la personne respective (3a, 3e, 3g) est capturé et mémorisé, et/ou
- une détection d'appareil terminal, dans laquelle au moins un appareil terminal (5), de préférence un terminal mobile, appartenant à la personne respective (3a, 3b, 3e, 3f, 3g) est enregistré et mémorisé.

4. Procédé de commande d'assistance vocale selon une des revendications précédentes, **caractérisé en ce que** dans l'étape de détection d'unité spatiale (102) on détermine le nombre de personnes (3a, 3b, 3c, 3d, 3e, 3f, 3g) qui sont dans l'unité spatiale (1), l'étape de détection d'unité spatiale (102) comprenant notamment :
- une différenciation vocale, grâce à laquelle le nombre de voix différentes est déterminé, et/ou
- une mesure du bruit, notamment lorsqu'un algorithme d'apprentissage automatique détecte un bruit de fond dans la pièce, dans laquelle personne ne se trouve, et/ou
- une évaluation générale de l'utilisation des données, au cours de laquelle les connexions de données des appareils terminaux (5) des personnes (3a, 3e, 3g) appartenant à l'unité spatiale (1) sont évaluées.

5. Procédé de commande d'assistance vocale selon une des revendications précédentes, **caractérisé en ce que** l'étape d'identification (103) comprend une identification vocale, dans laquelle au moins une personne (3a, 3b, 3c, 3d, 3e, 3f, 3g) située dans la pièce (2a, 2b, 2c, 2d) est identifié en fonction du profil vocal.

6. Procédé de commande d'assistance vocale selon la revendication 3, **caractérisé en ce que** l'étape d'identification (103) comprend :
- une comparaison de profils vocaux, dans laquelle les profils vocaux déterminés par le microphone sont comparés aux profils vocaux qui sont enregistrés et mémorisés pendant l'enregistrement du profil vocal, et/ou
- une évaluation individualisée de l'utilisation des données, grâce à laquelle les connexions de données des personnes respectives (3a, 3e, 3g) appartenant à l'unité spatiale (1) sont évaluées.

7. Procédé de commande d'assistance vocale selon une des revendications précédentes, **caractérisé en ce que** le dispositif d'assistance vocale (4a, 4b, 4c, 4d) est configuré pour accepter et transmettre des commandes vocales, dans lequel le numéro et/ou l'identité des personnes (3a, 3b, 3c, 3d, 3e, 3f, 3g) se trouvant dans la pièce (2a, 2b, 2c, 2d) sont vérifiées avant la transmission d'une commande vocale et une commande vocale d'une troisième catégorie n'est transmise que si un certain groupe de personnes se trouve dans la pièce (2a, 2b, 2c, 2d), notamment
- dans lequel le groupe de personnes est constitué exclusivement de personnes (3a, 3e, 3g) appartenant à l'unité spatiale (1), et/ou
- dans lequel le groupe de personnes est constitué exclusivement de personnes (3b, 3c), qui ont été préalablement autorisées, et/ou
- dans lequel le groupe de personnes est formé exclusivement par la personne qui émet la commande vocale (3a).

8. Procédé de commande d'assistance vocale selon une des revendications précédentes, **caractérisé en ce que** le dispositif d'assistance vocale (4a, 4b, 4c, 4d) est configuré pour accepter et transmettre des commandes vocales,
- dans lequel la transmission de la commande vocale est vérifiée dès que la personne qui émet la commande vocale (3a, 3b, 3c, 3d, 3e, 3f, 3g) a accepté l'utilisation des données,
- si le consentement n'est pas donné, il est demandé à la personne (3a, 3b, 3c, 3d, 3e, 3f, 3g) émettant la commande vocale d'accepter l'utilisation des données,
- si le consentement est donné, la commande vocale sera transmise.

9. Procédé de commande d'assistance vocale selon la revendication 8, **caractérisé en ce que** le consentement déjà donné pour l'utilisation de données d'une personne (3a, 3b, 3c, 3d, 3e, 3f, 3g) est mémorisé, notamment le consentement est attribué pour le profil vocal de la personne (3a, 3b, 3c, 3d, 3e, 3f, 3g).

10. Procédé de commande d'assistance vocale selon une des revendications précédentes, **caractérisé en ce qu'**un service, qui est fourni par un premier dispositif d'assistance vocale (4d) situé dans une première pièce (2d), est disponible via un deuxième dispositif d'assistance vocale (4b), qui est situé dans une deuxième pièce (2b), dès qu'il est déterminé que la personne (3e) se trouve dans la deuxième pièce (2b) ; notamment, le service du deuxième dispositif d'assistance vocale (4b) n'est pas assuré s'il y a certaines autres personnes dans la deuxième pièce (2b), notamment
- des personnes (3a, 3e, 3g) qui n'appartiennent pas à l'unité spatiale (1) et/ou
- des personnes (3d) qui n'ont pas été autorisées auparavant et/ou
- toute personne (3b, 3c, 3d, 3e, 3f, 3g) autre que la personne (3e) pour laquelle le service est mis à disposition.

11. Procédé de commande d'assistance vocale selon une des revendications précédentes, **caractérisé en ce que** avant la fourniture du service par le dispositif d'assistance vocale (4a, 4b, 4c, 4d) il est vérifié dans quelle pièce se trouve la personne (3e), pour laquelle le service doit être fourni, dans lequel le service est fourni par le dispositif d'assistance vocale (4d), qui se trouve dans la pièce (2d), dans laquelle la personne (3e) se trouve ; notamment, dans lequel le service d n'est pas assuré s'il y a certaines autres personnes (3f) dans la pièce (2d), notamment
- des personnes (3f) qui n'appartiennent pas à l'unité spatiale (1) et/ou
- des personnes (3d) qui n'ont pas été autorisées auparavant et/ou
- toute personne (3b, 3c, 3d, 3e, 3f, 3g) autre que la personne (3e) pour laquelle le service est mis à disposition ;
dans lequel notamment, un autre dispositif d'assistance vocale (4b) est recommandé pour fournir le service dans une autre pièce (4b) dans laquelle il n'y a personne d'autre ;
dans lequel notamment, le service est transmis à un appareil (5) de la personne (3e) si aucun dispositif d'assistance vocale libre (4a, 4b, 4c, 4d) n'est disponible.

12. Plateforme d'assistance vocale (10) pour commande d'assistance vocale pour une unité spatiale (1), qui comporte au moins une pièce (2a, 2b, 2c, 2d), configurée pour :
- dans une étape de détection de pièce (101), déterminer le nombre de personnes qui se trouvent dans au moins une pièce (2a, 2b, 2c, 2d) sur la base d'un signal acoustique provenant d'un microphone d'au moins un dispositif d'assistance vocale (4a, 4b, 4c, 4d), qui est connecté à la plateforme d'assistance vocale (10),
- dans une étape de détection d'unité spatiale (102), détecter l'appartenance de la ou des personnes (3a, 3b, 3c, 3d, 3e, 3f, 3g) à l'unité spatiale (1), et
- dans une étape d'identification (103), identifier au moins une personne (3a, 3b, 3c, 3d, 3e, 3f, 3g) située dans la au moins une pièce (2a, 2b, 2c, 2d),
- dans lequel le dispositif d'assistance vocale (4a, 4b, 4c, 4d) est configuré pour accepter et transmettre des commandes vocales, dans lequel la plateforme d'assistance vocale est **caractérisée en ce que** :
- le dispositif d'assistance vocale (4a, 4b, 4c, 4d) est configuré pour ne transférer que les commandes vocales d'une première catégorie, quand elles ont été émises par une personne (3a, 3e, 3g) appartenant à l'unité spatiale (1) et
- dans lequel le dispositif d'assistance vocale (4a, 4b, 4c, 4d) est configuré pour transmettre des commandes vocales d'une deuxième catégorie indépendamment de la personne (3a, 3b, 3c, 3d, 3e, 3f, 3g) émettant la commande vocale.

13. Produit de programme informatique pour commande d'assistance vocale, qui, lorsque le programme est exécuté par une plateforme d'assistance vocale (10), lui fait exécuter les étapes du procédé de la revendication 1.
